# EUROPEAN PATENT SPECIFICATION

(11) **EP 1 724 014 B1**
(45) Date of publication and mention of the grant of the patent: **03.08.2016**
(21) Application number: 05720847.2
(22) Date of filing: 09.03.2005
(51) Int. Cl.: B01J 35/02, B01J 23/18, B01D 53/86, B01J 35/00, B01J 37/08

(54) **USE OF A COMPOSITE OXIDE AS A VISIBLE LIGHT RESPONSIVE PHOTOCATALYST AND METHOD FOR DECOMPOSITION AND REMOVAL OF HARMFUL CHEMICAL MATERIAL USING THE SAME**
VERWENDUNG EINES MISCHOXIDS ALS AUF SICHTBARES LICHT ANSPRECHENDER PHOTOKATALYSATOR UND VERFAHREN ZUR ZERSETZUNG UND ENTFERNUNG VON SCHÄDLICHEN CHEMIKALIEN DAMIT
UTILISATION DE L'OXYDE COMPOSITE COMME PHOTOCATALYSEUR RÉACTIF À LA LUMIÈRE VISIBLE ET PROCÉDÉ DE DÉCOMPOSITION ET D'ENLÈVEMENT DE MATÉRIAU CHIMIQUE NOCIF UTILISANT LEDIT PHOTOCATALYSEUR

(30) Priority: 12.03.2004 JP 2004070381
(43) Date of publication of application: 22.11.2006
(73) Proprietor: National Institute for Materials Science, Tsukuba-shi, Ibaraki 305-0047 (JP)
(72) Inventor: YE, Jinhua,, Tsukuba-shi, Ibaraki 3050047 (JP); TANG, Junwang,, Ibaraki 3050047 (JP)
(74) Representative: Vossius & Partner Patentanwälte Rechtsanwälte mbB
(86) International application number: PCT/JP2005/004593
(87) International publication number: WO 2005/087371

(56) References cited:
- EP-A1- 0 125 810
- JP-A- 10 128 111
- JP-A- 10 128 111
- JP-A- 2003 260 356
- JP-A- 2004 024 936
- JP-A- 2004 358 332

## Description

The present invention relates to a photocatalyst which comprises a complex oxide semiconductor having a specific composition including bismuth oxide, and which is excellent in photoresponse by efficiently absorbing ultraviolet light and visible light such as included in the sunlight. Particularly, the present invention relates to a high activity photocatalyst for decomposing a harmful substance, the photocatalyst being excellent in ability for decomposing a harmful chemical substance, and relates to an environment purifying method, a global environment improving method, and particularly a harmful substance eliminating method for decomposing various harmful chemical substances represented by dioxins to detoxify them.

Increasingly getting serious is a global environment problem which is a negative inheritance brought about by the rapid economic growth in the 20th century. Safe and comfortable daily lives of humankind are threatened with: environmental hormone substances such as dioxins of course; agricultural chemicals, malodorous substances, and the like in water and in the atmosphere; and chemical substances which cause health hazards such as a sick house syndrome in living spaces.

It is thus demanded to develop a technique for restricting generation of such harmful substances, and to promptly eliminate those harmful substances which have been already generated.

In a photocatalyst, absorption of an energy equal to or larger than a bandgap excites electrons in a valence band to leave positive holes therein. The thus caused positive holes and electrons have strong oxidizing and reducing powers, respectively, and are therefore capable of oxidizing and reducing chemical substances present in the surroundings, respectively. Recently, it has been widely investigated to utilize a photocatalyst in decomposition of a harmful chemical substance as an applied research of photocatalyst, and photocatalysts are expected as effective environment purifying materials. There have been investigated and proposed applied examples including: decomposition of organic substances such as agricultural chemicals, malodorous substances in water and in the atmosphere; self-cleaning of a solid surface coated with a catalyst; and the like. However, most of them use titanium dioxide. Titanium dioxide has a bandgap of 3.2eV, thereby exhibiting an activity only under irradiation of ultraviolet light shorter than 400nm. As such, currently applied examples thereof are practiced only in the outdoor or only in the presence of an ultraviolet lamp.

The sunlight coming down to the surface of the earth has the maximum intensity of radiation near a wavelength of 500nm corresponding to visible light, such that an energy amount in a visible range covering wavelengths of 400 to 750nm is about 43% of the total energy of the sunlight. In turn, energy amounts in an ultraviolet range covering wavelengths not more than 400nm of the sunlight are even less than 5%. It is thus desired to develop a photocatalyst having a catalytic activity for light-beams in the visible range, so as to effectively utilize a sunlight spectrum.

Thus, if it is possible in the applied research to develop and use a photocatalyst capable of utilizing visible light, it is expected that efficiencies are remarkably improved commensurately with the widened usable wavelength range. Although it has been conventionally difficult to utilize titanium dioxide indoors where ultraviolet light is absent, it will be possible to expand the applicable market if visible light is made utilizable. Then, importance is given to a level of a conduction band. In this respect, positive holes in a valence band of an oxide semiconductor are extremely strong in oxidizing power, and are capable of oxidizing electron donors such as water and many organic substances. At that time, concurrently caused electrons in the conduction band are consumed by reducing oxygen in the air. Namely, the conduction band level should be negative as compared with a reduction level of oxygen.

Under such circumstances, the present inventors have earnestly and repeatedly investigated in the research group thereof, and conducted development of a series of visible light responsive photocatalysts. Further, the present inventors have filed several patent applications to the Japanese Patent Office (JP-A-2003-033661, JP-A-2003-251197, JP-A-2004-066028, JP-A-2004-275946, JP-A-2004-275947, JP-A-2004-358332,JP-A-2005-034716 on 10 February 2005, and JP-A-2005-199134 on 28 July 2005), concerning a part of results of the research. The visible light responsive photocatalysts according to these patent-related references are sensitive not only to ultraviolet light included in the sunlight but also to light-beams as visible light components thereof, so that the photocatalysts are each capable of utilizing not only an ultraviolet light portion but also a visible light portion of light energies with good utilization ratios, thereby largely improving catalytic functions with a significant contribution. However, it is natural to seek for a photocatalyst which can be easily designed and has a good efficiency. Particularly, there is sought for a photocatalyst which highly acts on harmful substances, with an excellent decomposing ability.

JP-A-10 128111 relates to a method of preparing chlorine by oxidation of hydrogen chloride and the oxidation or dehydrogenation under the action of an inhomogeneous catalyst, wherein the complex oxide is used as a catalyst.

EP-A-0 125 810 relates to the preparation of an aromatic product from isobutylene or propylene using complex oxides.

JP-A-2004-024936 discloses a BiVO₄ photocatalyst and a cleaning method using a fine powder of the catalyst.

### DISCLOSURE OF THE INVENTION

### Problem to be solved by the Invention:

The present inventors have earnestly and repeatedly investigated to provide a solution to the above demand. Namely, the present inventors have investigated to provide a novel catalyst and a method of using the catalyst to decompose harmful substances, in a manner that the catalyst: effectively absorbs not only ultraviolet light included in the sunlight but also visible light components thereof; exhibits an activity over a wide range from an ultraviolet range to a visible range; effectively decomposes harmful substances even when light-beams in a wider range are irradiated to the harmful substances; and detoxifyingly treats harmful substances. As a result, the present inventors have succeeded in developing a novel catalyst perfectly different in composition from a series of photocatalysts which have been proposed up to now. The present invention has been carried out based on such a success.

The above problem has been solved and the object has been achieved by the means recited in the following (1) through (3):
(1) Use of a complex oxide semiconductor represented by a general formula (I) : BaBiₓO_{y} (wherein x, y have values satisfying 0.5<x<2 and 2.5<y<4, respectively) as a visible light responsive photocatalyst.
(2) The use as defined in (1), wherein the photocatalyst is used for decomposing a harmful chemical substance.
(3) A harmful chemical substance decomposing and eliminating method, characterized in that the method comprises the step of:
   irradiating light-beams including ultraviolet light and visible light to a harmful substance in the presence of the photocatalyst recited in (2).

The photocatalyst comprising a complex oxide semiconductor represented by a general formula (I): BaBiₓO_{y} (wherein x, y have values satisfying 0.5<x<2 and 2.5<y<4, respectively) has a photoresponsive wavelength range widened to an upper limit of 640nm included in a visible range so as to largely widen an effectively usable wavelength range with an extremely important significance in view of the fact that photocatalysts provided up to now each have functioned only within an ultraviolet range. According to the present invention, it is possible to utilize a visible light energy to thereby highly effectively decompose harmful chemical substances such as acetaldehyde and dyes such as methylene blue. Further, the photocatalyst of the present invention may be of course used for other chemical reactions. For example, it can be applied to decomposition reactions of an environmental hormone such as dioxin and of organic substances, and the like, and to a reduction reaction of metal ions. Also, it largely contributes to environment purification. As described above, the complex oxide semiconductor photocatalyst of the present invention has an activity over a wide range of light, and the photocatalyst can be expected to be used for diversified usages other than the above usage examples by virtue of the property of the photocatalyst such that the role of the photocatalyst to be achieved from now on is considered to be extremely important.

The photocatalyst is constituted of a complex oxide of barium and bismuth, and has a composition designed based on the general formula (I): BaBiₓO_{y} (wherein x, y have values satisfying 0.5<x<2 and 2.5<y<4, respectively). The reason why the "x" for a Bi component is made to exceed 0.5 and to be less than 2, is that the present inventors have previously filed a Japanese patent application No. 2003-158744 (now published: JP-A-2004-358332 on 24. December 2004), and thereafter carefully reviewed it to comprehend that photocatalysts each comprising a complex oxide of Ba and Bi among the combinations formulated in the previous patent application are sensitive in a wider range from an ultraviolet range to a visible range to exhibit a photocatalytic effect even when the "x" is less than 2 while exceeding 0.5. Namely, the photocatalyst of the present invention is obtained as a result that the present inventors have further developed (evolved) the previously developed photocatalysts. Note that the "y" has a value to be duly defined within the above-mentioned associated range once the "x" has been defined in the above-mentioned associated range.

The photocatalyst comprising the complex oxide semiconductor of the present invention can be obtained by synthesis in a normal solid-state reaction method, i.e., by mutually mixing oxides of metal components as starting materials at a ratio of intended composition, followed by calcining in air under an ordinary pressure. In case of a starting material susceptible to sublimate, a slightly larger amount thereof is required to be added taking account of sublimation.

In addition to the sintering method, there are adopted various sol-gel method, coprecipitation method, complex polymerization method, and the like adopting metal alkoxides, metal salts, and the like including a method to prepare oxide precursors followed by calcining and synthesizing, and the present invention of course embraces these methods without particular reasons to exclude them.

It is desirable that the photocatalyst of the present invention is provided in a form of fine particles cooperatively having a larger surface area so as to effectively utilize light-beams. Although oxides prepared by a solid-state reaction method are provided in a large form of particles cooperatively having a smaller surface area, it is possible to further decrease diameters of the particles by grinding them by a ball mill or the like. Generally, the particles are 10nm to 200µm in size, and preferably 1µm or less. It is also possible to use the fine particles by forming them into various shapes including a plate shape. It is one way to use the fine particles by carrying them on a separate carrier having an appropriate shape, and it is also possible to use the fine particles in a manner coated in a thin-film shape.

The photocatalyst of the present invention can be of course used solely, and can be used in a manner that the photocatalyst has, attached to its surface, a co-catalyst comprising components including: a noble metal element such as Ag, Pt, or the like; a transition metal element such as Ni; NiOₓ (x represents a value exceeding 0 and equal to or less than 1); IrO₂; RuO₂, or the like. The co-catalyst serves to promote separation of photoexcited charges, thereby further enhancing the photocatalytic activity.

The photocatalyst of the present invention is applicable to many photocatalystic reactions. In case of organic substance decomposition, alcohols, agricultural chemicals, malodorous substances, and the like generally act as electron donors, in a manner that they are oxidized and decomposed by positive holes of the photocatalyst while hydrogen is generated or oxygen is reduced by electrons. Typically, the photocatalyst can be used as one for purifying the environment and improving the global environment, without limited thereto. The reaction form of the photocatalyst may be achieved by suspending the photocatalyst in an aqueous solution containing an intended organic substance and irradiating light-beams thereto, or by fixing the photocatalyst to a substrate. The reaction form may be a gaseous phase reaction, identically to that for decomposition of malodorous substances or harmful chemical substances.

The present invention will be concretely described hereinafter based on Examples which are disclosed to facilitate understanding of the present invention, without limited thereto.

### Example 1:

BaBiO₃ was synthesized by a solid-state reaction method by the procedures to be described hereinafter.

Namely, 5.00g of BaCO₃ and 5.914g of Bi₂O₃ were weighed to prepare a raw material mixture corresponding to 10g of BaBiO₃. The raw material mixture was placed into an alumina crucible and subjected to a preparative reaction by holding it at 700°C for 5 hours within an electric furnace provided in an environment at an atmospheric pressure, followed by sintering at 800°C for 12 hours. After completion of the calcining, the calcinate was ground by a mortar into a size of 10mm or less. The obtained specimen was evaluated, in chemical composition, optical characteristic, and catalytic performance. As a result, it had a chemical composition represented by BaBiO₃. Further, as a result of ultraviolet-visible absorption spectrum measurement, the photocatalyst obtained in this Example exhibited absorption spreading from an ultraviolet range to a visible range of 640nm or longer such that a bandgap was evaluated as 1.9eV or less, thereby clarifying that the photocatalyst exhibits a response to visible light.

1.5g of the synthesized BaBiO₃ was weighed, and used to conduct a test for decomposing 837ppm of acetaldehyde. There was adopted a 300WXe lamp as a light source, light of which was irradiated to a reaction cell through a cooling water cell so as to avoid a thermal effect by the light. Adopted as the reaction cell was one made of Pyrex Glass (registered trade-mark of Corning Incorporated). Detection and quantification of CO₂ as a decomposition product of acetaldehyde were conducted by gas chromatography, to calculate a decomposition ratio of acetaldehyde based on the amount of produced CO₂.

As a result, it was clarified that 95% or more of acetaldehyde was decomposed only in about 36 minutes under irradiation of visible light through a filter of 420nm.

### Example 2:

There was tested a dependency of acetaldehyde decomposition on light wavelengths, by the BaBiO₃ photocatalyst.

In Example 1, inserted into a window of the Xe lamp was a cut-off filter for passing therethrough only light-beams having wavelengths longer than 580nm, thereby conducting a photodecomposition reaction of acetaldehyde.

As a result, there was confirmed decomposition of about 60% of acetaldehyde only in 20 minutes even under irradiation of visible light through the filter of 580nm.

### Example 3:

0.3g of BaBiO₃ was suspended in 100ml of an aqueous solution of methylene blue at 15.3mg/l, thereby conducting a photodecomposition reaction of the methylene blue. Light was irradiated to the suspension from the outside, while stirring it by a magnetic stirrer. There was adopted a 300WXe lamp as a light source, and adopted as a reaction cell was one made of Pyrex Glass (registered trade-mark of Corning Incorporated).

There was conducted an ultraviolet-visible absorption spectrum measurement, to check a concentration change of methylene blue by photodecomposition thereof. As a result, it was revealed that 90% or more of methylene blue had decomposed in 60 minutes under irradiation of visible light through the filter of 420nm.

Although the above described Examples have been designed and synthesized in a case where x=1 and y=3 for the general formula BaBiₓO_{y} to thereby explain functions and effects of the photocatalyst of the present invention, the present invention is of course effective insofar as the composition range thereof is so defined that 0.5<x<2 and 2.5<y<4 in terms of x and y.

### Comparative Example 1:

There was checked a dependency of acetaldehyde decomposition on light wavelengths (360nm or longer), by using TiO₂ as a typical photocatalyst. The equipments used for measurement were the same as those in Example 1.

As a result, light-beams of different wavelengths were each irradiated for 20 minutes to show a result that ultraviolet light of 360nm showed the highest activity of a little more than about 50%, the activity was monotonously lost with an increase of wavelength to a visible range of 400nm or longer, and activities were not exhibited at all at wavelengths of 440nm or longer. The activities of this Comparative Example were much less than those of the BaBiO₃ throughout the measured wavelength range, thereby exhibiting a remarkable contrast therebetween. In this way, the TiO₂ photocatalyst did not actually function as an acetaldehyde decomposing catalyst under irradiation of visible light.

The above results are shown in Table 1 altogether. Namely, Table 1 shows the data altogether, each including the used photocatalytic component, the kind of reaction (object of reaction), the used light source and wavelength, light irradiation time, and a decomposition ratio. Also from this Table, it is confirmed that the catalyst comprising a complex oxide semiconductor represented by the general formula BaBiₓO_{y} (wherein x, y have values satisfying 0.5<x<2 and 2.5<y<4, respectively) is strongly responsive to visible light and excellent in visible light response, and provides a widened wavelength range to be effectively used. Namely, it is understood that a usage efficiency of light is improved to an extent that the visible range is made usable. Contrary, it is confirmed that the titanium dioxide catalyst TiO₂, which has been conventionally known as a photocatalyst, is never reactive to visible light at all. Comparing both catalysts with each other, the catalyst of the present invention has a remarkable ability as compared with the TiO₂ based catalyst, thereby proving that the functions and effects of the former are extremely remarkable.

Although the Examples have been each intentionally subjected to the associated decomposition reaction of the applicable harmful substance so as to confirm and prove an effectiveness of the photocatalyst of the present invention to thereby evaluate and confirm the performance thereof, applicable reactions are not limited to such a decomposition reaction. It is also possible to use it as a semiconductor photo-electrode for solar energy conversion. Namely, it can be used for various reactions and in various utilization forms for utilizing light energy, without particularly limited thereto.

**Table 1: Photocatalytic Activity Performance Test**

| | Used catalyst | Decomposition reaction | Used light source | Irradiation time | Decomposition ratio % |
|---|---|---|---|---|---|
| Ex. 1 | BaBiO₃ | acetaldehyde decomposition | 300W Xe lamp (>420nm) | 36 min | 95 |
| Ex. 2 | BaBiO₃ | acetaldehyde decomposition | 300W Xe lamp (>580nm) | 20 min | 60 |
| Ex. 3 | BaBiO₃ | methylene blue decomposition | 300W Xe lamp (>420nm) | 60 min | 90 |
| Com. Ex. 1 | TiO₂ | acetaldehyde decomposition | 300W Xe lamp (>440nm) | 20 min | 0 |

### INDUSTRIAL APPLICABILITY

The present invention exhibits an extremely remarkable significance by enabling a system capable of effectively utilizing a light energy, particularly an energy of light within a visible range, for decrease of harmful substances which recently become problematic and thus are to be dealt with on a scale of the earth. It is expected that the present invention exhibits its significance to be further emphasized, contributes to wholesome development of industries, and is to be widely utilized, as the regulations against harmful substances are made stricter.

## Claims

1. Use of a complex oxide semiconductor represented by a general formula (I) : BaBiₓO_{y} (wherein x, y have values satisfying 0.5<x<2 and 2.5<y<4, respectively) as a visible light responsive photocatalyst.

2. The use as defined in claim 1, **characterized in that** said visible light responsive photocatalyst is used for decomposing a harmful chemical substance.

3. A harmful substance decomposing and eliminating method, **characterized in that** the method comprises the steps of:
using a visible light responsive photocatalyst comprising a complex oxide semiconductor represented by a general formula (I) : BaBiₓO_{y} (wherein x, y have values satisfying 0.5<x<2 and 2.5<y<4, respectively); and
irradiating light-beams including ultraviolet light and visible light to a harmful substance in the presence of the photocatalyst, thereby decomposing the harmful substance.

## Patentansprüche

1. Verwendung eines Komplex-Oxid-Halbleiters, der durch die allgemeine Formel (I): BaBiₓO_{y} dargestellt ist (wobei x und y Werte haben, die 0,5 < x < 2 und 2,5 < y < 4 erfüllen), als ein auf sichtbares Licht ansprechender Photokatalysator.

2. Verwendung nach Anspruch 1, **dadurch gekennzeichnet, dass** der auf sichtbares Licht ansprechende Photokatalysator zum Zersetzen einer schädlichen chemischen Substanz verwendet wird.

3. Verfahren zum Zersetzen und Eliminieren einer schädlichen Substanz, **dadurch gekennzeichnet, dass** das Verfahren die Schritte aufweist:
Verwenden eines auf sichtbares Licht ansprechenden Photokatalysators, der einen Komplex-Oxid-Halbleiter aufweist, der durch die allgemeine Formel (I): BaBiₓO_{y} dargestellt ist (wobei x und y Werte haben, die 0,5 < x < 2 und 2,5 < y < 4 erfüllen); und
Bestrahlen einer schädlichen Substanz mit Lichtstrahlen, die ultraviolettes Licht und sichtbares Licht aufweisen, bei Anwesenheit des Photokatalysators, um die schädliche Substanz zu zersetzen.

## Revendications

1. Utilisation d'un oxyde complexe semi-conducteur représenté par une formule générale (I) : BaBiₓO_{y} (dans laquelle x, y ont des valeurs satisfaisant respectivement 0,5 < x < 2 et 2,5 < y < 4) en tant que photocatalyseur réactif à la lumière visible.

2. Utilisation selon la revendication 1, **caractérisée en ce que** ledit photocatalyseur réactif à la lumière visible est utilisé pour décomposer une substance chimique nocive.

3. Procédé de décomposition et d'élimination de substance nocive, **caractérisé en ce que** le procédé comprend les étapes :
d'utilisation d'un photocatalyseur réactif à la lumière visible comprenant un oxyde complexe semi-conducteur représenté par une formule générale (I) : BaBiₓO_{y} (dans laquelle x, y ont des valeurs satisfaisant respectivement 0,5 < x < 2 et 2,5 < y < 4) ; et
d'irradiation de faisceaux de lumière incluant de la lumière ultraviolette et de la lumière visible sur une substance nocive en présence du photocatalyseur, décomposant ainsi la substance nocive.
